(19) Europäisches Patentamt / European Patent Office / Office européen des brevets

(11) **EP 2 610 634 B1**

(12) **EUROPEAN PATENT SPECIFICATION**

(45) Date of publication and mention of the grant of the patent: **13.03.2019 Bulletin 2019/11**

(51) Int Cl.: ***G01S 7/41*** *(2006.01)* ***G01S 7/288*** *(2006.01)* ***G01S 7/292*** *(2006.01)*

(21) Application number: **12425210.7**

(22) Date of filing: **28.12.2012**

(54) **Method for determining an estimate of the radial speed of radar echoes by using the Doppler information**

Verfahren zur Bestimmung einer Schätzung der Radialgeschwindigkeit von Radarechos mittels Dopplerinformation

Procédé pour déterminer une estimation de la vitesse radiale d'échos radar en utilisant les informations de doppler

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2011 IT RM20110690**

(43) Date of publication of application: **03.07.2013 Bulletin 2013/27**

(73) Proprietor: **LEONARDO S.p.A.**
**00195 Roma (IT)**

(72) Inventors:
- **Gallone, Sergio**
  **00131 Roma (IT)**
- **Amato, Felicia**
  **00131 Roma (IT)**
- **Brelati, Antonio**
  **00131 Roma (IT)**
- **Stile, Antonio**
  **00131 Roma (IT)**
- **Golino, Giovanni**
  **00131 Roma (IT)**

(74) Representative: **Santi, Filippo et al**
**Barzanò & Zanardo Roma S.p.A.**
**Via Piemonte 26**
**00187 Roma (IT)**

(56) References cited:
**US-A- 4 972 194** **US-A- 5 177 487**
**US-A1- 2010 026 559**

- **James P. Hansen ET AL: "High-Resolution Radar Sea Scatter, Experimental Observations and Discriminants", ADA113394, 5 March 1982 (1982-03-05), pages 1-53, XP055041604, Retrieved from the Internet: URL:http://www.dtic.mil/cgi-bin/GetTRDoc?Location=U2&doc=GetTRDoc.pdf&AD=ADA113394 [retrieved on 2012-10-19]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 610 634 B1

## Description

## CROSS REFERENCE TO RELATED APPLICATIONS

The present disclosure concerns a method for determining an estimate of the radial speed of radar echoes by using the Doppler information and claims the priority of the Italian patent application number RM2011A000690, filed on December 28, 2011.

More in detail, the present disclosure concerns a method of post-processing of the radar data that uses the information of the absolute Doppler speed as obtained by the coherent elaboration of the input data.

With the term clutter one indicates all the undesired echoes received by a radar, usually constituted by the reflection of the electromagnetic Energy upon natural elements (mountains, precipitations, etc.) or artificial (buildings, architectural structures, etc.) of the ambient surrounding the target. The clutter therefore constitutes a disturbance of the additive type (besides the thermal noise and the jamming) that superposes to the useful signal identifying instead the target to be detected.

The problem of the filtering of the clutter in the marine field is well known in literature: when one uses a radar in the X band with medium or high range resolution (i.e. 5-10 meters), the sea clutter shows itself in the form of a multitude of temporary peaks or "spikes" of the sea surface visualizes on the console of the operator. This clutter depends on the sea state and the grazing angle of the radar. This phenomenon has as an effect that of producing radar echoes that have the same behaviors as small targets. The occurrence rate of this effect show an increment as soon as the sea roughness state increases, and such an effect produces in the detection a white background that cannot be filtered by the usual tracking processing.

In particular, concerning the spikes one has the following [1,2]:

- The radar echoes coming from marine ambient, as seen by a high resolution radar, are of short duration and repetitive and are termed "sea spikes";
- The typical duration of the sea spikes, for a X band radar is of around 1 second, and with a repetition time of around 12-16 s, for sea states below force 3;
- When the sea is seen by a high resolution radar, so many sea spikes are detected that any other signal is concealed. With low resolution radar the sea spikes appears continuous and random.

In Fig. 1 the time progression o fan echo relevant to a true target is shown (a signaling buoy), as obtained by a conventional Doppler filtering of the radar signal.

In Fig. 2 the progression of a sea spike is represented: it comes out to be equivalent to that of the target of Fig. 1, and this shows that it is not possible to distinguish one from the other, and therefore to filter them, by exploiting only the amplitude characteristics along time.

Patent document US 3,699,573 A [3] describes a canonical method for the correlation of plots on subsequent scans or "scan to scan correlator", wherein a hypothetical maximum speed is used which can be reached by targets of interest, which is fixed "a priori" and which cannot solve in an effective way the problem of the sea spikes, since the correlation windows generated in such a way are too large and the probability to have sea spikes in the so determined windows in both scans is such not to be able to filter in a decisive way the sea spikes.

Patent document US 2010/026559 A1 [4] describes a method to discriminate between target and clutter to improve "a-prori" the detection performances of the target. For all the range cells, even if they do not generate plots, the method tries to eliminate the clutter without necessarily using a coherent radar: one has resort to the estimation of the relative speed between target and clutter that is obtained by the phase difference of the radar signal along the range in the absence of a univocal phase reference between transmitter and receiver. The method described, that is applied entirely in the signal processing, presents however unsatisfactory results in the case of sea spikes.

Patent document US 4,972,194 A [5] describes a method of the estimation of the Doppler speed by the calculation of the phase difference between echoes of a burst of subsequent transmitted impulses to the end of determining the average Doppler speed of the clutter to per calibrate a Doppler filter that carries out the cancelation of such a clutter in the radar signal of the subsequent burst, obtaining results that are still unsatisfactory in the case of sea spikes. This method is applied entirely in the signal processing as well.

These known methods are not enough effective in the filtering of the sea spikes, and the need remains for a method that, by processing the radar information in a different way, succeeds to obtain a better final filtering, i.e. to discriminate the detections of the various naval vessels from those of the sea spikes.

It is object of the present disclosure that of providing a method for filtering the clutter that solves the problems connected to the sea spikes and overcomes the inconveniences of the prior art.

It is also object of the present invention providing a method for determining the speeds and the radial directions of extracted plots.

It is subject-matter of the present disclosure a method for determining an estimate of the absolute radial speed of radar plots, covering a certain radar area in subsequent scans of duration $T_{scan}$ wherein it transmits a signal and listens to return echoes during a sweep time interval and comprising a coherent transmitter and receiver with a coherent oscillator that gives the phase reference, a signal processor, a radar extractor that on the basis of detected echoes, produced by objects close to the waterbody surface or sea spikes produced by a radar in X-band and with resolution of 5-10 metres or less, extracts plots characterized by range and azimuth, the method being characterized in that it comprises a quantization of the range radar area into a plurality of elementary radar range cells, and the execution of the following steps:

- A1. Extracting from the radar signal provided by the coherent receiver the phase of all echoes within a single sweep,
- A2. For each cell, calculating the phase differences $\Delta\varphi$ between any two subsequent sweeps within a pre-defined coherent processing interval CPI comprising a multiplicity of subsequent sweeps;
- A2b. Selecting only the range cells wherein the coherent radar extractor has extracted a plot;
- A3. For the range cells of step A2b, calculating the instantaneous absolute radial speeds *v* and radial direction of the echoes, starting from the phase differences of sub-step A2, as $v=(\lambda/4\pi T)\cdot\Delta\varphi$, wherein the radial direction of the echoes is positive in case of moving away of the object that has caused the echo from the radar and negative in the case of approaching to the radar, $\lambda$ is the radar operation wavelength, *T* is the time interval between two subsequent steps;
- A4. For each range cell of step A2b, averaging the values of the absolute radial speeds and directions of the echoes obtained for all the CPIs in sub-step A3, obtaining the radial speeds and radial directions of the corresponding extracted plots; and
- A5. For each range cell of step A2b, obtaining the radial speeds and radial directions of the corresponding extracted plot as the averages calculated in step A4.

Steps A1-A5 are performed downstream of the radar extractor and not in the signal processing (as for example in [4] and [5]), decreasing the computational load with respect to this type of solutions.

According to an aspect of the present disclosure, the radar is a radar with a solid-state transmitter for the monitoring of waterbodies and VTS (Vessel Traffic Service) applications.

According to an aspect of the present invention, said elementary cells have dimensions comprised between 0.5 and 2 times the radar range resolution.

It is further specific subject-matter of the present disclosure a coherent radar, in particular for the detection of objects on waterbodies, that covers a certain radar area in subsequent scans of duration $T_{scan}$ wherein it transmits a signal and listens to return echoes during a sweep time interval and has a coherent transmitter and receiver, a signal processor, a radar extractor that extracts plots characterized by range and azimuth, the radar being characterized in that it comprises electronic processing means configured to execute the steps of the method for determining an estimate of the radial speed of radar echoes according to the present disclosure.

According to an aspect of the present disclosure, the radar comprises a console that includes a display for the visualization of radar detections, whereon the signal filtered by said electronic processing means are visualized.

According to an aspect of the present disclosure, said electronic processing means are constituted by the radar processor.

## BRIEF DESCRIPTION OF DRAWINGS

The subject-matter of present disclosure will be now described by way of illustration but not by way of limitation, with particular reference to the figures of the annexed drawings, wherein:

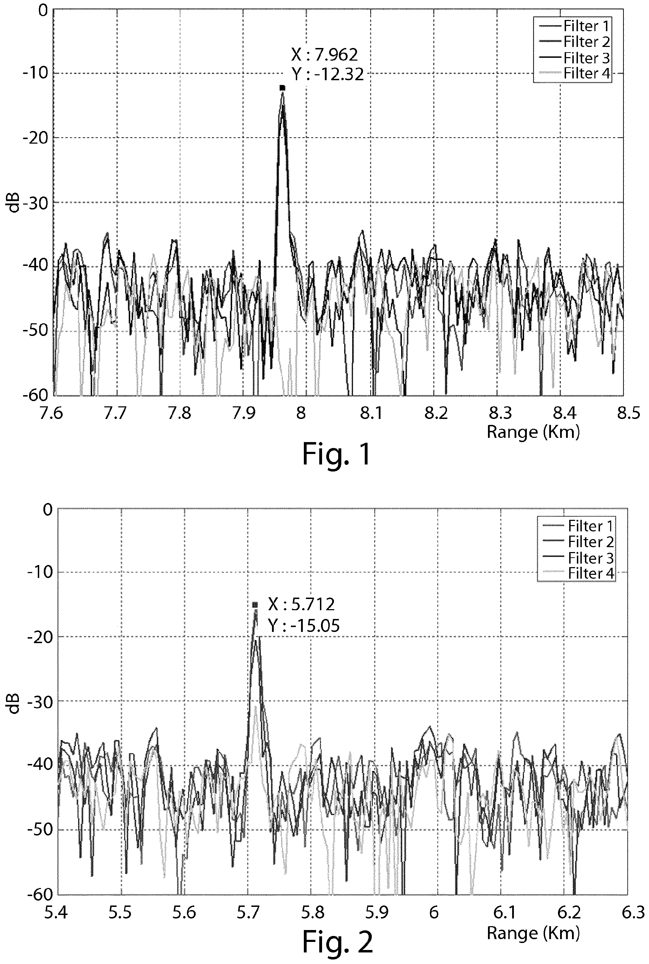

- Fig. 1 shows the radar signal coming from a buoy at 7,96 km from the same radar, according to the known art;
- Fig. 2 is the radar signal coming from a sea spike at 5,72km from the radar, according to the known art;

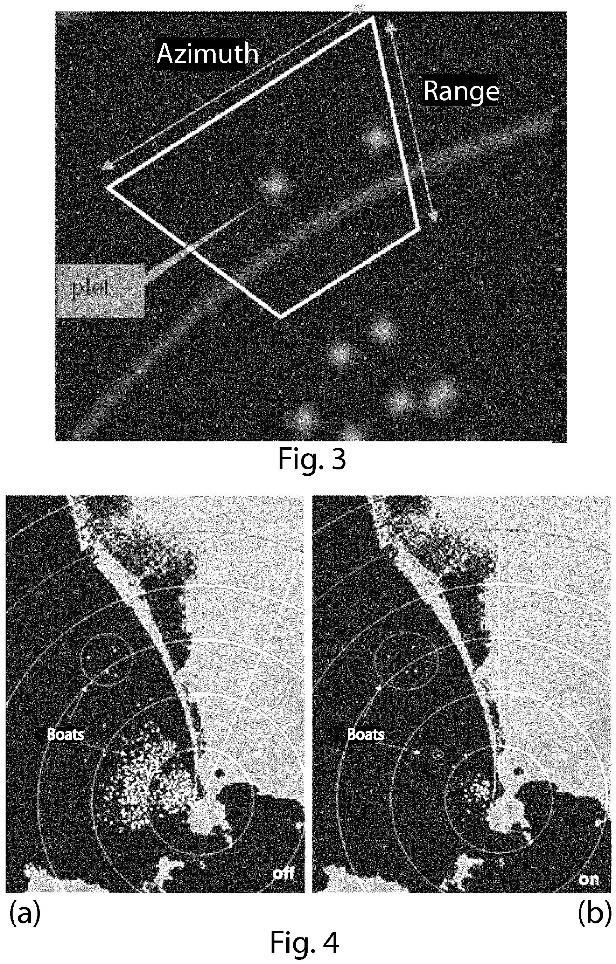

- Fig. 3 is an example of range-azimuth window;
- Fig. 4 is an image of the radar display without (a) and with (b) the filter according to the present disclosure, as obtained during an experimental proof in force 3 sea conditions;

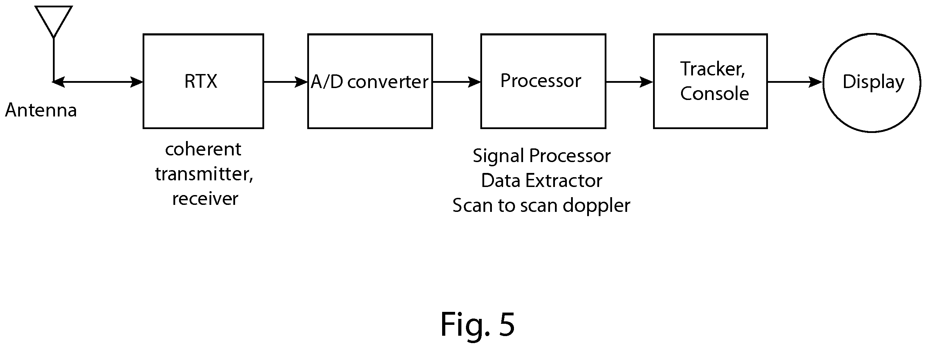

- Fig. 5 shows a block and flow-chart diagram of a radar implementing the method according to the present disclosure;

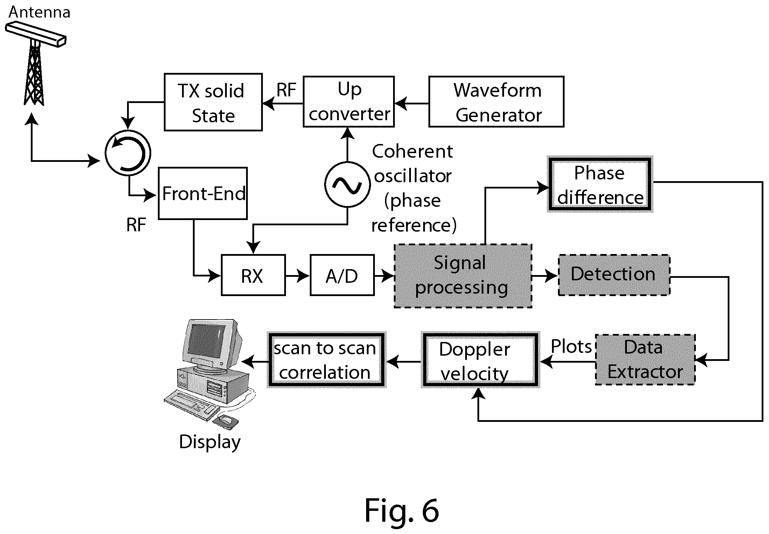

- Fig. 6 shows a block diagram of the radar, that is more detailed than that of Fig. 5, wherein the phase coherence between transmitter and receiver is highlighted;

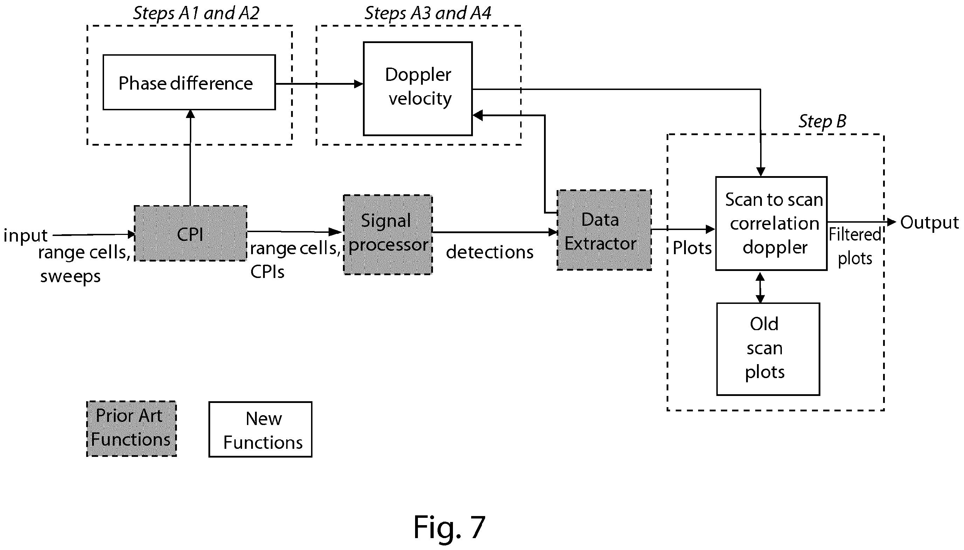

- Fig. 7 shows a block diagram of the overall method according to the present disclosure: the darker blocks represent the standard functions, the other ones the functions added thanks to the present disclosure;

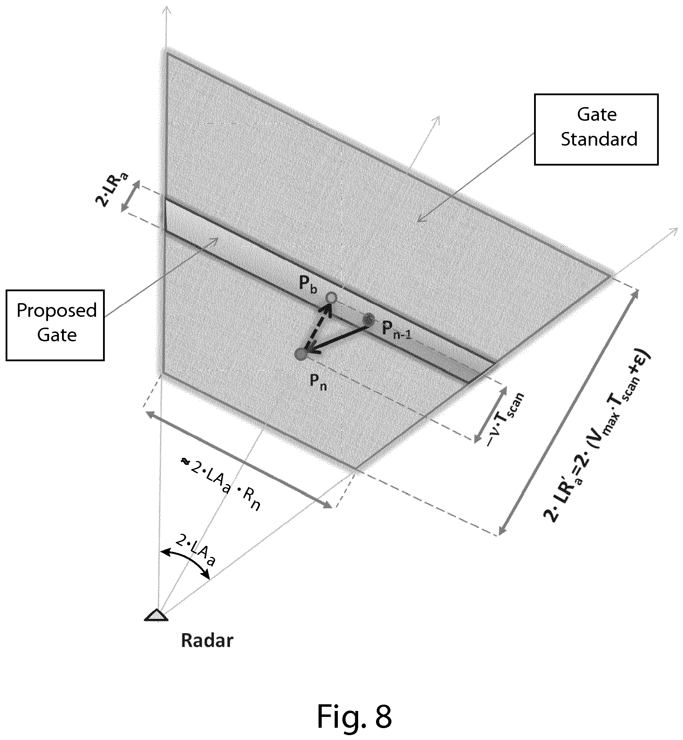

- Fig. 8 shows graphically the difference in terms of range amplitude between the correlation window obtained by the present disclosure and that obtained by the canonical method of [3].

## DETAILED DESCRIPTION

The method according to the present disclosure for the filtering of the sea clutter can be separated in two parts:

- estimation of radial speed (of the echoes, be them targets or spikes), and
- scan-to-scan correlation by using the radial speed estimation, for the filtering of the sea clutter.

These two functions according to the present disclosure are preferably to be applied in coherent radars with solid state transmitter for the sea monitoring and the VTS (Vessel Traffic Service) applications.
The present disclosure is useful for reducing the effects of the sea spikes and filtering the radar echoes without negatively influencing the correct target detection.
The estimation of the radial speed is based on the coherence of the radar (that for VTS applications can be obtained by nowadays technology of the radars with solid-state transmitter), and is subdivided into the following functions:

- Subdividing the radar area into discrete range intervals defining the so-called radar cells;
- Phase difference: estimation of the phase relevant to each radar cell in the single "sweep" (that is a time interval during which the radar listens to the return echoes) and calculates the phase difference for each radar cell between two subsequent sweeps, within a Coherent Processing Interval (CPI) comprising two or more subsequent sweeps;
- For each cell, calculating the radial speed of the echoes starting from the phase difference between subsequent sweeps, as follows:

$$v = \frac{\lambda}{4\pi T}\Delta\varphi$$

  wherein:

  $v$ = absolute and instantaneous radial speed, estimated from the radar echo
  $\lambda$ = wavelength
  T = time interval between 2 subsequent sweeps
  $\Delta\varphi$ = phase difference of the radar signal between 2 subsequent sweeps

- For each cell, averaging the values of radial speed for all the echoes obtained within the CPI.

In order to limit the processing load without influencing the performances, it is possible to carry out, for each radar cell, only the calculation of the phase difference, whilst the calculation of the radial speed and its average can be performed only for the radar cells that have generated a plot after the extractor.
The conventional method for the estimation of the radial speed based on Doppler filters according to the prior art is not effective when sea spikes are present, because the speed of the targets to be detected can be very close to those of the sea spikes, i.e. greatly much smaller than the resolution permitted by the Doppler filter.
The other function, i.e. the scan-to-scan correlation with the use of the radial speed, is carried out at the level of the plots extraction (after the radar extractor), as follows:

- Each extracted plot is stored in memory at each scan;
- For each extracted plot, a range-azimuth area is considered, which is termed "window", as indicated in figures 3 and 8. The window is calculated as follows:
  - The azimuth angular half-amplitude of the window is calculated starting from the maximum speed that a target can reach for a specific state of the sea:

$$LA_a = \operatorname{asin}\left(\frac{V_{\max} \cdot T_{scan}}{R}\right)$$

wherein $LA_a$ is the azimuth angular semi-amplitude, $V_{\max}$ is the target maximum speed, $T_{scan}$ is the scanning time interval of the radar antenna, and R is the range of the plot;

◦ range angular semi-amplitude of the window is according to one aspect larger or equal to the maximum range system error of the radar (a smaller value could lead to loosing the target because it would easily fall outside the window);

◦ The radial position $R_b$ of the window center is calculated by subtracting, to the radial position of the plot, the range shift lo as derived from the radial speed and the scanning speed of the radar, as follows:

$$R_b = R - v \cdot T_{scan}$$

wherein $R$ is the range position of the plot and $v$ is the radial speed, that is positive in case of moving away of the target from the radar and negative in case of approaching to the same (the speed is used to make the windows sufficiently small to be able to carry out subsequently an effective correlation; otherwise, with large windows, the clutter would correlate as well);

◦ The azimuth position $A_b$ of the window is the same position of the plot.

- The window is used to correlate (in position, and, for a even deeper filtering, also in speed) the plot of the current radar scan with all the plots stored in the previous scan: if there is correlation with at least a plot of the previous scan, then the plot is stored for further processing required by the radar system, otherwise the plot is canceled.

On the basis of the tests performed by the Applicant, the estimation of the radial speed is necessary to obtain the results of the filtering method of the present disclosure, owing to the fact that, in the absence of such a data, the windows come out to be too large in range and the likelihood that at the previous scan another spike is present is very high, and therefore the filter is ineffective in these conditions.

On the basis of the radar type and the radar site, the following parameters are for example defined in the method according to the present disclosure:

- Azimut amplitude of the windows: as a function of range and maximum target speed;

- Maximum error for the evaluation of speed, that is useful in the case of speed correlation;

- Number of stored scans: the algorithm can be extended to process (by the above correlation) the stored plot of the previous scan or of $k \geq 2$ previous scans, to obtain a better filtering;

- Maximum range: the maximum range wherein the clutter is expected.

The functionality permitted by the method of the present disclosure has been tested on a solid-state coherent radar (the coherence is in any case essential to detect the absolute phase and estimate the absolute radial speed), in different sites and conditions of the sea with the following parameters:

- Maximum speed for the target: 10Knots,

- Maximum Range for the clutter: 10Km,

- Maximum Error for the speed evaluation: 1 m/s.

The application of the method according to the present disclosure has produced the following results:

- Probability of detecting the target: the reduction of the detection probability with the above parameters was negligible;

- Probability of false alarms: the number of false alarms produced by the spikes, with the above parameters, diminished by an order of magnitude, with force ≥ 3 sea state conditions.

In Fig. 4 the result obtained in conditions of raging wind is shown (sea state beyond force 3), without (a) and with (b) the application of the filter according to the present disclosure.

As above evidenced, the nowadays methods do not allow an effective filtering of the spikes, because for the sea applications non-coherent magnetron radar are utilized.

The non-coherent radars do not allow the estimation of the absolute radial speed, essential to obtain an effective filtering according to the method described by the present disclosure. The described method overcomes the limitations by utilizing a coherent solid-state radar of last generation, but it is obviously applicable to any future technology providing the coherence.

Fig. 6 shows a block diagram of an exemplary radar that is more detailed than that of Fig. 5. In Fig. 6, the following is indicated:

- A Waveform generator that generates a low-frequency version of the signal to be transmitted;
- A coherent oscillator that guarantees the phase coherence between the transmitter and the receiver, i.e. the phase reference necessary to determine the absolute Doppler frequency of the echoes;
- An up-converter that transform the signal generated at low frequency into a radio-frequency (RF) signal for the transmission;
- A solid-state transmitter TX that guarantees the required power;
- A circulator connected to the antenna to decouple the transmitter from the receiver;
- An antenna with periodical scanning of the azimuth;
- A front-end representing the part of the receiver with highest frequency;
- A block referenced as RX that represents the part of the receiver with lowest frequency;
- An A/D, i.e. a sub-system for sampling the radar analogic signal that executes the digitalization of the components in phase and quadrature;
- A processing of the signal that executes a digital filtering on a radar signal;
- A block indicated as Detection i.e. a sub-system with threshold for the detection of the echoes starting from the radar signal filtered by the signal processing;
- A data extractor, i.e. a sub-system for the aggregation of the "detections" into "plots" with range and azimuth estimation;
- A block "Phase difference" that calculates the coherent phase difference between two subsequent sweeps of the radar signal filtered by the signal processing;
- A block indicated as "Doppler velocity", i.e. a sub-system that, starting from the plot and the information of the phase difference, associates to the same plot an estimation of the absolute Doppler speed;
- A scan-to-scan correlator that, starting from the plots of two or more subsequent scans and the absolute Doppler speed associated to them, executes the filtering of the sea spikes;
- a Display that finally visualize the plots that overcame the filtering of the scan-to-scan correlator.

The present disclosure concerns the blocks "Phase difference", "Doppler velocity" and "Scan-to-scan correlation".

The method described by the present disclosure overcomes the limitations o fuse of the standard plots correlation window (utilized in [3]), that is not based on the estimation of the radial speed of the plots, but on the maximum absolute speed that a target can achieve, that is fixed "a priori". The use of the standard correlation windows does not solve the problem of the large number of false alarms generated by the sea spikes in case of sea state force 3 o higher, since the windows is too large in range and the probability to have a plot due to a sea spike within the window is very high. The range amplitude of the correlation window utilized in the present disclosure depends instead by the accuracy of the estimation of the absolute radial speed and is much smaller than the standard one (fig. 8), therefore the probability to have a plot due to a sea spike is much lower, though maintaining a high correlation probability in the presence of a target.

For further clarity, Fig. 8 shows graphically the difference in terms of amplitude between the correlation window obtained by the present disclosure and that obtained by the canonical method of [3]. In the figures one indicates as:

- $P_n$ and $P_{n-1}$ two plots generated by the radar extractor respectively at the *n*-th and *(n-1)*-th scan, the plot $P_n$ having range and azimuth co-ordinates ($R_n$,$A_n$) and Doppler speed equal to *v;*
- $P_b$ the center of the correlation speed generated starting from plot $P_n$, whose azimuth $A_b$ is equal to $A_n$ whilst range $R_b$ is obtained by the following formula:

$$R_b = R_n - v \cdot T_{scan}$$

  Wherein $T_{scan}$ is the scanning time period of the antenna;
- $LA_a$ the azimuth angular half-amplitude of the correlation window both in the canonical case and the present disclosure case, equal to:

$$LA_a = \operatorname{asin}\left(\frac{V_{\max} \cdot T_{scan}}{R_n}\right)$$

  wherein $V_{\max}$ is the maximum value of the absolute speed that a target can achieve.
- $LR_a$ the range half-width of the correlation window utilized in the present disclosure, equal to:

$$LR_a \quad 3 \cdot \sqrt{\sigma_R^2 + \sigma_v^2 \cdot T_{scan}^2}$$

  wherein $\sigma_R$ is the standard deviation of the range estimation error and $\sigma_v$ is the standard deviation of the radial speed estimation error by the radar.
- $LR'_a$ the range half-width of the standard correlation speed, equal to:

$$LR'_a = V_{\max} \cdot T_{scan} + \varepsilon$$

  wherein $\varepsilon$ is the range estimation maximum error by the radar; one assumes here that the maximum error be approximable to three times the error standard deviation.

The estimation of the radial speed *v* by the radar is positive in case of moving away of the object that caused the radar echo and negative in case of coming closer to the same. In Fig. 8 one has assumed an echo coming closer.

By way of example, one compares the range width of the correlation window of the present disclosure with that utilized according to the standard method of [3]; the following values of the quantities determining such widths are considered:

- Scanning time $T_{scan}$ of the radar antenna equal to 6 seconds;
- standard deviation of the range measurement range error $\sigma_R$ of the radar equal to 3 meters;
- standard deviation $\sigma_v$ of the target speed estimation error obtained by applying the method of calculation of the absolute radial speed according to the present disclosure, equal to 0.3 m/s;
- pre-set maximum speed for a naval target $V_{max}$ equal to 20 m/s.

One obtains in the standard case:

$$LR_A^{'} = V_{\max} \cdot T_{scan} + 3 \cdot \sigma_R = 20 \cdot 6 + 3 \cdot 3 = 129 \quad m$$

One obtains in the case of the method of the present disclosure:

$$LR_A = 3 \cdot \sqrt{\sigma_R^2 + \sigma_v^2 \cdot T_{scan}^2} = 3 \cdot \sqrt{9 + 0.09 \cdot 36} = 10.5 \ m$$

Hence, one achieve the utilization of a correlation window having an area that is one order of magnitude smaller.

It is here remarked that the present disclosure distinguishes itself from the prior art solutions based on the use of Doppler speed in the signal processing (for example [4] and [5]), owing to the fact that such an estimation is calculated and utilized after the radar extractor, what requires a computational load that is remarkably smaller. Another remarkable difference with respect to [4] and [5] concerns the use made of the Doppler speed estimation: it determines the correlation of the plots of subsequent antenna scans without intervening in the detection step.

In particular the method of the invention allows to calculate the Doppler velocity by means of the calculation of the phase difference between successive pulses. The aim of the present invention is completely different with respect of that of the method in [5], wherein the estimation of the Doppler velocity obtained by means of the echoes of a burst of transmitted successive pulses serves in order to calibrate a Doppler filter that performs the cancelation of the clutter in the radar signal of the subsequent burst, obtaining results that are still unsatisfactory in the case of sea spikes. This method is applied integrally in the signal processing. Instead, in the present invention, the method utilizes the estimation of the Doppler velocity to distinguish between target e sea spikes; this estimation is not utilized in the signal processing but in the post-processing after the data extractor to improve the correlation of the plots of subsequent sweep of the antenna. Therefore, the estimation of the velocity according to the present invention is not utilized in the subsequent burst but in the subsequent sweep, instead in the subsequent bursts another estimate of the velocity in an independent manner that serves to average the previous one and thus decreasing the effect of the noise and disturbances.

Bibliography:

1. J. P. Hansen and V. F. Cavaleri, "High-Resolution Radar Sea Scatter, Experimental Observations and Discriminants," NRL Report 8557, March 5, 1982.

2. Merrill I. Skolnik, "Radar handbook", third edition - The McGraw-Hill Companies - 2008.

3. US 3 699 573 A, A. La Verne et al., "System for automatic initiation of target tracking in a track-while-scan radar", 17/10/1972.

4. US 2010/026559 A1, A. Siegel, "System for enhanced detection of a target", 04/02/2010.

5. US 4 972 194 A, B. Carrara et al., "Method and device compensating for the speed of clutter in a coherent Doppler radar with variable blind speed", 20/11/1990.


Aspects of the present disclosure have been above described and some modifications of the present disclosure have been suggested, but it should be understood that those skilled in the art can make variations and changes, without so departing from the related scope of protection, as defined by the following claims.

## Claims

1. Method for determining an estimate of the absolute radial speed of radar echoes, covering a certain radar area in subsequent scans of duration $T_{scan}$ wherein it transmits a signal and listens to return echoes during a sweep time interval and comprising a coherent transmitter and receiver, with a coherent oscillator that gives the phase reference, a signal processor, a radar extractor that on the basis of detected echoes, produced by objects close to a waterbody surface or by sea spikes produced by a radar in X-band and with resolution of 5-10 meters or less, extracts plots **characterized by** range and azimuth, the method being **characterized in that** it comprises a quantization of the range radar area into a plurality of elementary radar range cells, and the execution of the following steps:

A1. Extracting from the radar signal provided by the coherent receiver the phase of all echoes within a single sweep;
A2. For each cell, calculating the phase differences $\Delta\varphi$ between any two subsequent sweeps within a predefined coherent processing interval CPI comprising a multiplicity of subsequent sweeps;
A2b. Selecting only the range cells wherein the coherent radar extractor has extracted a plot;
A3. For the range cells of step A2b, calculating the instantaneous absolute radial speeds v and radial direction of the echoes, starting from the phase differences of sub-step A2, as $v = \lambda/(4\pi T)\cdot\Delta\varphi$, wherein the radial direction of the echoes is positive in case of moving away of the object that has caused the echo from the radar and negative in the case of approaching to the radar, $\lambda$ is the radar operation wavelength, T is the time interval between two subsequent sweeps;
A4. For each range cell of step A2b, averaging the values of the absolute radial speeds and directions of the echoes obtained for all the CPIs in sub-step A3, obtaining the radial speeds and radial directions of the corresponding extracted plots; and
A5. For each range cell of step A2b, obtaining the radial speeds and radial directions of the corresponding extracted plot as the averages calculated in step A4.

**2.** Method according to claim 1, **characterized in that** the radar is a radar with a solid-state transmitter for the monitoring of waterbodies and VTS, Vessel Traffic Service, applications.

**3.** Method according to any claim 1 to 2, **characterized in that** said elementary cells have dimensions comprised between 0.5 and 2 times the radar range resolution.

**4.** Coherent radar, in particular for the detection of objects on waterbodies, that covers a certain radar area in subsequent scans of duration $T_{scan}$ wherein it transmits a signal and listens to return echoes during a sweep time interval and has a coherent transmitter and receiver, a signal processor, a radar extractor that extracts plots **characterized by** range and azimuth, the radar being **characterized in that** it comprises electronic processing means configured to execute the steps of the method for determining an estimate of the radial speed of radar echoes according to any claim 1 to 3.

**5.** Coherent radar according to claim 4, **characterized in that** it comprises a console that includes a display for the visualization of radar detections, whereon the signal filtered by said electronic processing means are visualized.

**6.** Coherent radar according to claim 4 or 5, **characterized in that** said electronic processing means are constituted by the radar processor.

## Patentansprüche

**1.** Verfahren zum Ermitteln einer Schätzung der absoluten Radialgeschwindigkeit von Radarechos, die einen bestimmten Radarbereich in darauffolgenden Abtastungen einer Dauer $T_{scan}$ abdecken, wobei es ein Signal überträgt und während eines Sweep-Zeit-Intervalls auf Echos wartet, und umfassend einen kohärenten Sender und Empfänger, mit einem kohärenten Oszillator, der die Phasenreferenz angibt, einem Signalprozessor, einem Radarextraktor, der auf der Grundlage detektierter Echos, die von Objekten in der Nähe einer Gewässeroberfläche oder von oder von Meeresspitzen erzeugt werden, die von einem Radar im X-Band und mit einer Auflösung von 5-10 Metern oder weniger erzeugt werden, Plots extrahiert, die durch Reichweite und Azimut gekennzeichnet sind, wobei das Verfahren **dadurch gekennzeichnet ist, dass** es eine Quantisierung des Radar-Reichweitenbereichs in eine Mehrzahl von Elementarradar-Reichweitenzellen und die Ausführung der nachfolgenden Schritte umfasst:

A1. Extrahieren, aus dem Radarsignal, das vom kohärenten Empfänger bereitgestellt ist, der Phase aller Echos innerhalb eines einzigen Sweeps;
A2. für jede Zelle, Berechnen der Phasendifferenzen $\Delta\varphi$ zwischen beliebigen zwei aufeinanderfolgenden Sweeps innerhalb eines vordefinierten kohärenten Verarbeitungsintervalls CPI, das eine Mehrzahl von aufeinanderfolgenden Sweeps umfasst;
A2b. Auswählen nur der Reichweitenzellen, in welchen der kohärente Radarextraktor einen Plot extrahiert hat;
A3. für die Reichweitenzellen aus Schritt A2b, Berechnen der momentanen absoluten Radialgeschwindigkeiten v und der Radialrichtung der Echos beginnend mit den Phasendifferenzen aus Unterschritt A2 als $v=\lambda/(4\pi T)\cdot\Delta\varphi$, wobei die Radialrichtung der Echos positiv ist für den Fall, dass sich vom Objekt, welches das Echo verursacht hat, vom Radar entfernt wird, und negativ ist für den Fall, dass sich an das Radar angenähert wird, $\lambda$ die Radar-

Betriebswellenlänge ist, T das Zeitintervall zwischen zwei aufeinanderfolgenden Schritten ist;
A4. für jede Reichweitenzelle aus Schritt A2b, Mittelwertbilden der Werte der absoluten Radialgeschwindigkeiten und Richtungen der Echos, die für alle die CPIs in Unterschritt A3 erhalten werden, Erhalten der Radialgeschwindigkeiten und Radialrichtungen der entsprechenden extrahierten Plots; und
A5. für jede Reichweitenzelle aus Schritt A2b, Erhalten der Radialgeschwindigkeiten und Radialrichtungen des entsprechenden extrahierten Plots als die in Schritt A4 berechneten Mittelwerte.

2. Verfahren nach Anspruch 1, **dadurch gekennzeichnet, dass** das Radar ein Radar mit einem Festkörpersender für die Überwachung von Gewässern und VTS-, Vessel Traffic Service-, Anwendungen ist.

3. Verfahren nach einem der Ansprüche 1 bis 2, **dadurch gekennzeichnet, dass** die Elementarzellen Abmessungen haben, die zwischen dem 0,5- und 2-fachen der Radarbereichsauflösung enthalten sind.

4. Kohärentes Radar, insbesondere für die Detektion von Objekten auf Gewässern, das einen bestimmten Radarbereich in darauffolgenden Abtastungen der Dauer $T_{scan}$ abdeckt, wobei es ein Signal überträgt während eines Sweep-Zeit-Intervalls auf Echos wartet, und das einen kohärenten Sender und Empfänger einen Signalprozessor, einen Radarextraktor, der Diagramme extrahiert, die durch Reichweite und Azimut gekennzeichnet sind, wobei das Radar **dadurch gekennzeichnet ist, dass** es elektronische Verarbeitungsmittel umfasst, die zum Ausführen der Schritte des Verfahrens zum Bestimmen einer Schätzung der Radialgeschwindigkeit von Radarechos nach einem der Ansprüche 1 bis 3 konfiguriert sind.

5. Kohärentes Radar nach Anspruch 4, **dadurch gekennzeichnet, dass** es eine Konsole umfasst, die eine Anzeige für die Visualisierung von Radardetektionen einschließt, worauf das von den elektronischen Verarbeitungsmitteln gefilterte Signal visualisiert wird.

6. Kohärentes Radar nach Anspruch 4 oder 5, **dadurch gekennzeichnet, dass** die elektronischen Verarbeitungsmittel von dem Radarprozessor gebildet werden.

## Revendications

1. Procédé pour déterminer une estimation de la vitesse radiale absolue d'échos radar, couvrant une certaine zone radar lors de balayages ultérieurs de durée $T_{scan}$ où il émet un signal et écoute des échos en retour pendant un intervalle de temps de balayage et comprenant un émetteur et un récepteur cohérents, avec un oscillateur cohérent qui donne la référence de phase, un processeur de signal, un extracteur de radar qui, sur la base des échos détectés, produits par des objets proches d'une surface d'une masse d'eau ou par des pics de mer produits par un radar en bande X et avec une résolution égale ou inférieure à 5-10 mètres, extraits des tracés **caractérisés par** une distance et un azimut, le procédé étant **caractérisé en ce qu'**il comprend une quantification de la zone radar de distance en une pluralité de cellules de distance radar élémentaires, et l'exécution des étapes suivantes :

A1. extraire du signal radar fourni par le récepteur cohérent la phase de tous les échos au sein d'un même balayage ;
A2. pour chaque cellule, calculer les différences de phase $\Delta\varphi$ entre deux balayages ultérieurs quelconques dans un intervalle de traitement cohérent prédéfini CPI comprenant une multiplicité de balayages ultérieurs ;
A2b. sélectionner uniquement les cellules de distance dans lesquelles l'extracteur de radar cohérent a extrait un tracé ;
A3. pour les cellules de distance de l'étape A2b, calculer les vitesses radiales absolues instantanées v et la direction radiale des échos, en partant des différences de phase de la sous-étape A2, telles que $v=\lambda/(4\pi T)\cdot\Delta\varphi$, où la direction radiale des échos est positive en cas d'éloignement de l'objet qui a provoqué l'écho du radar et négative en cas de rapprochement vers le radar, $\lambda$ est la longueur d'onde de fonctionnement du radar, T est l'intervalle de temps entre deux balayages ultérieurs ;
A4. pour chaque cellule de distance de l'étape A2b, calculer la moyenne des valeurs des vitesses radiales absolues et des directions des échos obtenues pour toutes les CPI à la sous-étape A3, obtenir les vitesses radiales et les directions radiales des tracés extraits correspondants ; et
A5. pour chaque cellule de distance de l'étape A2b, obtenir les vitesses radiales et les directions radiales du tracé extrait correspondant comme étant les moyennes calculées à l'étape A4.

2. Procédé selon la revendication 1, **caractérisé en ce que** le radar est un radar à émetteur à semi-conducteurs pour la surveillance des masses d'eau et pour des applications aux STM, services de trafic maritime.

3. Procédé selon l'une quelconque des revendications 1 à 2, **caractérisé en ce que** lesdites cellules élémentaires ont des dimensions comprises entre 0,5 et 2 fois la résolution en distance radar.

4. Radar cohérent, en particulier pour la détection d'objets sur des masses d'eau, couvrant une certaine zone radar lors de balayages ultérieurs de durée $T_{scan}$ où il transmet un signal et écoute les échos en retour pendant un intervalle de temps de balayage et possède un émetteur et un récepteur cohérents, un processeur de signaux, un extracteur de radar qui extrait des tracés **caractérisés par** une distance et un azimut, le radar étant **caractérisé en ce qu'**il comprend des moyens de traitement électroniques configurés pour exécuter les étapes du procédé de détermination d'une estimation de la vitesse radiale d'échos radar selon l'une quelconque des revendications 1 à 3.

5. Radar cohérent selon la revendication 4, **caractérisé en ce qu'**il comprend une console incluant un afficheur pour la visualisation de détections radar, sur lequel sont visualisés les signaux filtrés par lesdits moyens de traitement électroniques.

6. Radar cohérent selon la revendication 4 ou 5, **caractérisé en ce que** lesdits moyens de traitement électroniques sont constitués par le processeur radar.

0
-10
-20
dB -30
-40
-50
-60
7.6 7.7 7.8 7.9 8 8.1 8.2 8.3 8.4 8.5
Range (Km)
Filter 1
Filter 2
Filter 3
Filter 4
X : 7.962
Y : -12.32

Fig. 1

0
-10
-20
dB -30
-40
-50
-60
5.4 5.5 5.6 5.7 5.8 5.9 6 6.1 6.2 6.3
Range (Km)
Filter 1
Filter 2
Filter 3
Filter 4
X : 5.712
Y : -15.05

Fig. 2

Azimuth
Range
plot

Fig. 3

Boats
5
off
Boats
5
on

(a) (b)

Fig. 4

Display
Tracker,
Console
Processor
Signal Processor
Data Extractor
Scan to scan doppler
A/D converter
RTX
coherent
transmitter,
receiver
Antenna

Fig. 5

Antenna
TX solid State
RF
Up converter
Waveform Generator
Coherent oscillator (phase reference)
Front-End
RF
RX
A/D
Signal processing
Phase difference
Detection
Data Extractor
Plots
Doppler velocity
scan to scan correlation
Display

Fig. 6

input
range cells,
sweeps
CPI
range cells,
CPIs
Signal processor
detections
Data Extractor
Plots
Scan to scan correlation doppler
Filtered plots
Output
Old scan plots
Step B
Steps A1 and A2
Phase difference
Steps A3 and A4
Doppler velocity
Prior Art Functions
New Functions

Fig. 7

Gate Standard
Proposed Gate
$2 \cdot LR_a$
$P_b$
$P_{n-1}$
$P_n$
$\sim v \cdot T_{scan}$
$2 \cdot LR'_a = 2 \cdot (V_{max} \cdot T_{scan} + \varepsilon)$
$\approx 2 \cdot LA_a \cdot R_n$
$2 \cdot LA_a$
Radar

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- IT RM2011A000690
- US 3699573 A
- US 2010026559 A1
- US 4972194 A


### Non-patent literature cited in the description


- **J. P. HANSEN ; V. F. CAVALERI.** High-Resolution Radar Sea Scatter, Experimental Observations and Discriminants. *NRL Report,* 05 March 1982, vol. 8557
- **MERRILL I. SKOLNIK.** Radar handbook. The McGraw-Hill Companies, 2008